## Europäisches Patentamt
## European Patent Office
## Office européen des brevets

(19)

(11) Veröffentlichungsnummer: **0 166 314**
**B1**

(12) **EUROPÄISCHE PATENTSCHRIFT**

(45) Veröffentlichungstag der Patentschrift: **31.10.90**

(51) Int. Cl.⁵: **C 08 G 59/16**

(21) Anmeldenummer: **85107305.6**

(22) Anmeldetag: **13.06.85**

(54) **Verfahren zur Herstellung Amidgruppen enthaltender Epoxid/Amin-Addukte.**

(30) Priorität: **16.06.84 DE 3422472**

(43) Veröffentlichungstag der Anmeldung:
**02.01.86 Patentblatt 86/01**

(45) Bekanntmachung des Hinweises auf die
Patenterteilung:
**31.10.90 Patentblatt 90/44**

(84) Benannte Vertragsstaaten:
**AT BE CH DE FR GB IT LI NL SE**

(56) Entgegenhaltungen:
**EP-A-0 033 038**
**GB-A- 543 843**
**US-A-3 477 974**
**US-H- 916 002**

(73) Patentinhaber: **BASF Aktiengesellschaft**
**Carl-Bosch-Strasse 38**
**D-6700 Ludwigshafen (DE)**

(72) Erfinder: **Kempter, Fritz Erdmann, Dr.**
**L 2, 14**
**D-6800 Mannheim 1 (DE)**
Erfinder: **Sabelus, Guenther, Dr. Dipl.-Ing.**
**Neustadter Strasse 25**
**D-6715 Lambsheim (DE)**
Erfinder: **Schupp, Eberhard, Dr.**
**Tilsiter Weg 4**
**D-6830 Schwetzingen (DE)**
Erfinder: **Weiss, Wolfram, Dr.**
**Am Speyerweg 40**
**D-6704 Mutterstadt (DE)**

**Beschreibung**

Die vorliegende Erfindung betrifft ein Verfahren zur Herstellung Amidgruppen enthaltender Epoxid/Amin-Addukte durch Umsetzung primäre und/oder sekundäre Aminoalkylgruppen enthaltender Epoxidharz/Amin-Addukte mit Carbonsäuren.

Die Umsetzung von Epoxidharz/Amin-Addukten mit Carbonsäuren ist eine gebräuchliche Reaktion zur Herstellung von Ausgangsmaterialien oder Zwischenprodukten bei der Herstellung von Überzugsmitteln, insbesondere wasserlöslicher und kathodisch abscheidbarer Bindemittel.

So sind z.B. derartige Umsetzungen in den DE-A-30 08 810, DE-A-27 37 375 und DE-A-29 14 297 beschrieben worden. Dabei wurden Umsetzungstemperaturen von 140 - 200°C genannt.

Ausreichend schnell verläuft die Amidierung jedoch, wie festgestellt wurde, erst bei 190 - 200°C in der Schmelze. Schon bei 170°C werden zur Umsetzung eines Epoxidharz/Diamin-Adduktes, wie es z.B. mit Hexan-1,6-diamin hergestellt werden kann, 15 - 20 Stunden benötigt, um 85 - 90% der Carboxylgruppen umzusetzen.

Der vorliegenden Erfindung lag deshalb die Aufgabe zugrunde, ein Verfahren zur Herstellung Amidgruppen-enthaltender Epoxid/Amin-Addukte bereitzustellen, welches niedrige Herstellungstemperaturen sowie einen möglichst vollständigen Umsatz der Carbonsäuren ermöglicht und die Steuerbarkeit des Verfahrens, z.B. im Hinblick auf die Viskositätsbestimmung, bis zum Erreichen bestimmter Endviskositätswerte innerhalb bestimmter Zeitabstände, schnell und gut gewährleistet.

Überraschenderweise wurde festgestellt, daß die Anwesenheit von Veresterungskatalysatoren in Schmelze oder besonders wirkungsvoll in alkoholischer Lösung niedrigere Amidbildungstemperaturen ermöglicht.

Erfindungsgemäß erreicht man die beschleunigte Umsetzung von Epoxidharz/Amin-Addukten mit Carbonsäuren unter Abspaltung vom Wasser und Amidgruppenbildung in Gegenwart von Veresterungskatalysatoren.

Gegenstand der vorliegenden Erfindung ist ein Verfahren zur Herstellung Amidgruppen enthaltender Epoxidharz/Amin-Addukte durch Umsetzung primäre und/oder sekundäre Aminoalkylgruppen enthaltender Epoxidharz/Amin-Addukte mit Carbonsäuren, das dadurch gekennzeichnet ist, daß die Amidbildung in Gegenwart mindestens eines Veresterungskatalysators aus der Reihe Triphenylphosphin, Triphenylphosphinoxid, Zinnoctoat, Tetrabutoxytitanat, Tetraoctylenglycoltitanat, Triethanolamintitanat, Zinkacetat, Bleiacetat, Dibutylzinnoxid und Dibutylzinndilaurat durchgeführt wird.

Der Veresterungskatalysator wird im allgemeinen in Mengen von 0,1 bis 3,0, vorzugsweise 0,5 bis 2 Gewichtsprozent, bezogen auf das Verfahrensprodukt eingesetzt.

Eine besonders bevorzugte Ausführungsform des erfindungsgemäßen Verfahrens besteht darin, die erfindungsgemäße Umsetzung in Anwesenheit eines Alkohols durchzuführen, entweder bei Temperaturen, die unter der Siedetemperatur des Alkohols liegen oder im Falle nicht wasserlöslicher Alkohole unter Auskreisen von Wasser.

Für die erfindungsgemäße Amidbildung ist im allgemeinen ein Temperaturbereich von etwa 140 bis 180°C geeignet. Besonders bevorzugt sind Temperaturen von 160 - 175°C. Die korrespondierenden Reaktionszeiten liegen bei 2 - 10 Stunden; bevorzugt werden Reaktionszeiten von 3 - 6 Stunden gewählt.

Zu den Einsatzkomponenten des erfindungsgemäßen Herstellungsverfahrens ist im einzelnen folgendes auszuführen:

Als Epoxidharz/Amin-Addukte kommen vorzugsweise $NH_2$- und NH-Gruppen tragende Produkte in Frage.

Produkte, die primäre Aminogruppen enthalten, sind beispielsweise in der US-PS 39 47 339 beschrieben und werden erhalten durch Umsetzung eines Epoxidharzes mit polyaminen, bei denen die primären Aminogruppen durch Ketimingruppen blockiert sind. Beim Einsatz derartiger Produkte muß vor der erfindungsgemäßen Reaktion im allgemeinen die Ketimingruppe, mindestens partiell, hydrolytisch gespalten werden.

Produkte, die neben primären Aminogruppen noch sekundäre Aminogruppen aufweisen, die in ß-Stellung eine sekundäre OH-Gruppe tragen, sind beispielsweise die Umsetzungsprodukte von Epoxidharzen mit Polyaminen bzw. Diaminen, wie sie in den DE-A-27 37 375, DE-B-2 845 988 und DE-A-29 14 297 sowie DE-A-30 08 810, DE-A 28 05 936 und der DE-A-34 22 473 beschrieben sind.

Als Produkte, die primäre und sekundäre Aminogruppen besitzen, die in ß-Stellung eine sekundäre OH-Gruppe tragen, können auch die Umsetzungsprodukte von Epoxidharzen mit Ammoniak eingesetzt werden. Solche Epoxid-Amin-Addukte sind z.B. in der DE-A-29 14 297 beschrieben.

Die für das erfindungsgemäße Verfahren verwendbaren Carbonsäuren können Mono- und Dicarbonsäuren, in untergeordneten Mengen auch Tricarbonsäuren sein, wie sie z.B. als Nebenprodukt in Dimerfettsäuren auftreten.

Für das erfindungsgemäße Verfahren geeignete Monocarbonsäuren können 2 bis 24, vorzugsweise 10 bis 18 Kohlenstoffatome enthalten. Diese Monocarbonsäuren können gesättigt oder ungesättigt sein. Außerdem können sie auch verzweigt sein, sowie aromatische und cycloaliphatische Ringe aufweisen. Als spezielle Beispiele seien Capryl-, Caprin-, Stearin-Säure sowie Linol- und Linolensäure genannt.

Als Dicarbonsäuren eignen sich im allgemeinen solche mit 3 - 38, vorzugsweise 4 - 36 Kohlenstoffatomen. In Frage kommen z.B. Adipinsäure, Sebazinsäure, Nonan-, Decan-Dicarbonsäure, Dimerfettsäuren, wie z.B. Pripol® 1014 (= dimerisierte Fettsäure der Fa. Unilever) sowie aromatische oder cycloaliphatische Dicarbonsäuren wie Phthalsäure und Terephthalsäure. Es können auch Gemische der obengenannten Carbonsäuren eingesetzt werden. Bevorzugt sind Dimerfettsäuren.

Die die Amidbildung katalysierenden Veresterungskatalysatoren werden im allgemeinen in einer Menge von 0,1 bis 3, vorzugsweise 0,3 bis 2,0 Gew.%, bezogen auf das Verfahrensprodukt eingesetzt. Als Veresterungskatalysatoren werden Triphenylphosphin, Triphenylphosphinoxid, Sn-octoat, Tetrabutoxytitanat, Tetraoctylenglykoltitanat, Triethanolamintitanat, Zinkacetat, Bleiacetat, Dibutylzinnoxid und Dibutylzinndilaurat verwendet.

Selbstverständlich können innerhalb des erfindungsgemäßen Verfahrens die Veresterungskatalysatoren auch kombiniert werden. So kann beispielsweise Amidosulfonsäure mit Triphenylphosphin vorteilhaft kombiniert werden.

Die Verwendung von Veresterungskatalysatoren bei der Amidgruppenbildung Umsetzung von Epoxidharz/Amin-Addukten mit Carbonsäuren ergibt eine wesentliche Beschleunigung der Reaktion.

Eine weitere Verbesserung der Reaktionsgeschwindigkeit wird beobachtet, wenn die Umsetzung in Anwesenheit von Alkoholen durchgeführt wird. Bevorzugt eingesetzt werden hochsiedende Alkohole wie Benzylalkohol, 4-Methylbenzylalkohol, 2-Phenylpropanol-1, 2-Ethylhexanol-1, Iso-4-Methylbenzylalkohol, 2-Phenylpropanol-1, Isononanol, Isodecanol, Cyclohexanol, 4-t-Butylcyclohexanol, und die sog. ®Alfole (= Gemisch von $C_{12}$-$C_{15}$-Alkohlen), Glykolether wie Butylglykol, Butyldiglykol, Hexylglykol, Ethyldiglykol, Cyclohexylglykol und Monophenylglykol. Das erfindungsgemäße Herstellverfahren wird dann im allgemeinen bei Temperaturen durchgeführt, die unter der Siedetemperatur des Alkohols liegen, wenn beabsichtigt ist, ohne Verlust des Alkohols zu arbeiten. Durch das erfindungsgemäße Verfahren in alkoholischer Lösung wird die Steuerbarkeit des Verfahrens, z.B. im Hinblick auf die Viskositätsbestimmung bis zum Erreichen bestimmter Endviskositätswerte innerhalb bestimmter Zeitabstände vereinfacht. Bevorzugte Alkohole sind Benzylalkohol und 4-Methylbenzylalkohol.

Die erfindungsgemäß zu verwendenden Veresterungskatalysatoren können je nach verwendetem Vernetzungsmittel auch die Härtung der mit den Amidgruppen enthaltenden Harzen hergestellten Beschichtungen katalysieren. Die Verwendung von Triphenylphosphin beeinflußt die Helligkeit der Beschichtungen; hochsiedende Alkohole sind wirksam als Verlaufsmittel, und Glykolether können als sogenannte Kontaktlösungsmittel eingesetzt werden.

Die nach dem erfindungsgemäßen Verfahren hergestellten Produkte eignen sich als Lackbindemittel, im besonderen als Bindemittel für die kathodische Elektrotauchlackierung.

Die in den Beispielen genannten Teile und Prozente sind, soweit nicht anders angegeben, Gewichtsteile bzw. Gewichtsprozente.

Herstellung eines Epoxidharz/Amin-Adduktes:

1920,0 Teile eines Diglycidylethers aus Epichlorhydrin und Bisphenol A mit einem Epoxidwert von 0,5 werden in 480 Teilen Toluol bei etwa 70°C gelöst. 2000,0 Teile dieser Lösung werden 1485,0 Teilen Hexamethylendiamin in 2,5 Stunden bei 70°C zugetropft. Diese Lösung wird in einem Dünnschichtverdampfer bei 150°C und anschließend bei 190°C und 0,3 Torr vom Lösungsmittel und überschüssigem Amin befreit. Das helle Harz hat einen Erweichungspunkt von 69°C und eine Säurezahl von 2,0 mg KOH/g. Die Analyse ergab einen Gesamtgehalt an basischem Stickstoff von 4,2%, wovon 2,0% auf auf primäre-, 2,1% auf sekundäre- und 0,1% auf tertiäre Aminogruppen entfallen.

Vergleichsbeispiel 1

160,0 Teile des oben beschriebenen Epoxidharz/Hexamethylendiamin-Adduktes werden nach Zugabe von 27,8 Teilen Dimerfettsäure (z.B. Pripol 1014) und 9,0 Teilen Benzoesäure bei 170°C unter einem schwachen Stickstoffstrom in einem Reaktionsgefäß, das mit einem Destillationskühler verbunden ist, zur Reaktion gebracht. Nach 17-stündiger Reaktion wird eine Säurezahl von 6,5 mg KOH/g erreicht.

Vergleichsbeispiel 2

Der in Beispiel 1 beschriebene Ansatz wird mit 24,0 Teilen Isodecanol vermischt. Nach 16-stündiger Reaktion bei 170°C war die Säurezahl auf einen Wert von 5,2 abgefallen.

Beispiel 1

160,0 Teile des oben beschriebenen Epoxidharz/Hexamethylendiamin-Adduktes werden mit 27,8 Teilen Dimerfettsäure und 9,0 Teilen Benzoesäure aufgeschmolzen. Bei 130 bis 140°C werden 1,96 g Tetrabutoxytitanat gelöst in 24,0 Teilen Isodecanol in 5 Minuten zudosiert. Bei 170°C gerührt erreicht der Ansatz nach 5 Stunden eine Säurezahl von 3 mg KOH/g.

Beispiel 2

Die in Beispiel 1 beschriebene Umsetzung wird in Gegenwart von 1,96 Teilen Triphenylphosphin durchgeführt. Nach 8-stündigem Rühren bei 170°C wird eine Säurezahl von 7 mg KOH/g erreicht.

Beispiel 3

160,0 Teile des oben beschriebenen Epoxidharz/Hexamethylendiamin-Adduktes werden mit 27,8 Teilen Dimerfettsäure und 9,0 Teilen Benzoesäure sowie 24,0 Teilen Isodecanol, 12 Teilen Hexylglykol und 3,0 Teilen Triphenylphosphin aufgeschmolzen.

Bei 100 - 120°C werden 1,84 Teile Amidosulfonsäure, in etwas Wasser gelöst, zugesetzt und langsam auf 140°C erhitzt, um das Wasser zu entfernen. Ab 140°C beginnt eine deutliche Ammoniakentwicklung, die bei 160 - 170°C ihren Höhepunkt erreicht.

Nach 5-stündiger Reaktion bei 170°C wird eine Säurezahl von 8,5 mg KOH/g erreicht. Die berechnete Säurezahl des Produktes, bezogen auf Sulfonatgruppen, beträgt 6 mg KOH/g.

Beispiel 4

Der gleiche Ansatz wie unter Beispiel 2 beschrieben, aber in 32,0 Teilen Benzylalkohol mit 3,0 Teilen Triphenylphosphin durchgeführt, erreicht nach einer Reaktionszeit von 5 Stunden bei 170°C eine Säurezahl von 2,7 mg KOOH/g.

**Patentansprüche**

1. Verfahren zur Herstellung Amidgruppen enthaltender Epoxidharz/Amin-Addukte durch Umsetzung primäre und/oder sekundäre Aminoalkylgruppen enthaltender Epoxidharz/Amin-Addukte mit Carbonsäuren, dadurch gekennzeichnet, daß die Amidbildung in Gegenwart mindestens eines Veresterungskatalysators aus der Reihe Triphenylphosphin, Triphenylphosphinoxid, Zinnoctoat, Tetrabutoxytitanat, Tetraoctylenglykoltitanat, Triethanolamintitanat, Zinkacetat, Bleiacetat, Dibutylzinnoxid und Dibutylzinndilaurat durchgeführt wird.

2. Verfahren nach Anspruch 1, dadurch gekennzeichnet, daß als Veresterungskatalysator Triphenylphosphin und/oder Tetrabutoxytitanat in einer Menge von 0,1 - 3,0%, bezogen auf das Verfahrensprodukt, eingesetzt wird.

**Revendications**

1. Procédé de préparation de produits d'addition résine époxy/amine contenant des groupes amides, par réaction de produits d'addition résine époxy/amine contenant des groupes aminoalkyle primaires et/ou secondaires, caractérisé par le fait que la formation d'amide est effectuée en présence d'au moins un catalyseur d'estérification de la série triphénylphosphine, triphénilphosphinoxyde, octoat d'étain, tétrabutoxytitanate, tétraoctylenglykoltitanate, triéthanolamintitanate, acétate de zinc, acétate de plomb, oxyde de dibutylétain et dilaurate de dibutylétain.

2. Procédé selon la revendication 1, caractérisé par le fait qu'on introduit, comme catalyseur d'estérification, de la triphénylphosphine et/ou de tétrabutoxytitanate en proportion de 0,1-3,0% rapportées au produit du procédé.

**Claims**

1. A process for the preparation of an amide-containing epoxy resin/amine adduct by reacting an epoxy resin/amine adduct containing primary or secondary aminoalkyl groups with a carboxylic acid, wherein amide formation is carried out in the presence of one or more esterification catalysts from the group consisting of triphenylphosphine, triphenylphosphine oxide, tin octoate, titanium tetrabutylate, tetraoctyleneglycol titanate, triethanolamine titanate, zinc acetate, lead acetate, dibutyltin oxide and dibutyltin dilaurate.

2. A process as claimed in claim 1, wherein the esterification catalyst used is triphenylphosphine or titanium tetrabutylate in an amount of 0.1-3.0%, based on the product.